# EUROPEAN PATENT APPLICATION

(11) **EP 1 551 166 A1**
(43) Date of publication of application: **06.07.2005**
(21) Application number: 03030042.0
(22) Date of filing: 31.12.2003
(51) Int. Cl.: H04N 1/04

(54) **Film images preview method for film scanner**

(71) Applicant: MICROTEK INTERNATIONAL INC., Hsinchu, Taiwan 300 (TW)
(72) Inventor: Tien, Jason, Industial Park, Hsinchu Taiwan 300, (TW)
(74) Representative: Urner, Peter, Dipl.-Phys.

(57) **Abstract**

A preview method for a film scanner includes the steps of: scanning images on a film held at a film holder by a film scanner with a low resolution to provide a pre-scanned images; recognizing the type of the film holder by receiving information of the film holder outputted from the film scanner; performing a frame positioning step if the film holder is a 120 type film holder; and directly displaying pre-scanned images on a job panel if the film holder is not the 120 type film holder and displaying pre-scanned images on the job panel according to the position and size of image frames adjusted in the frame positioning step if the film holder is the 120 type film holder. Therefore, users do not have to choose the frame size before a preview process.

## Description

### BACKGROUND OF THE INVENTION

### Field of the Invention

The invention relates to a method for previewing film images in a film scanner, and more particularly to a film images preview method having a frame positioning function during a film images preview process.

### Description of the Related Art

A typical "135 type" camera captures images on the film with the same size of 24*36 mm, while the so-called "120 type" camera captures images on the film with different sizes, such as 6*4.5 cm, 6*6 cm, 6*7 cm, 6*9 cm, and the like. Because the gaps between the images on the film captured by different "120 type" cameras may be different, when a user previews the images of the 120 type film using a film scanner and selects an image size without matching the actual image size, the job panel displayed on the screen may define the position and size of image frames that cannot match with the captured images scanned from the film.

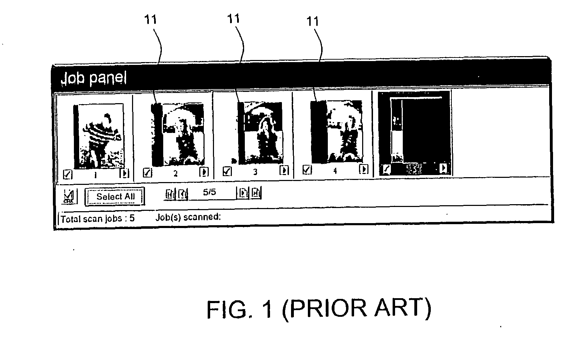

This result cannot meet the user's demand when the 120 film is scanned and displayed by the typical preview method. FIG. 1 shows a film preview image using the typical preview method, wherein the position and size of image frames defined on the job panel cannot match with the actually captured images. As shown in FIG. 1, the image width on the film is greater than the image frame width that is set by the user before the preview process (for example, the frame width set by the user is 6 cm), but the actual image width is 7 cm. Therefore, the gaps 11 are the errors area caused during the film preview process. Also, the typical job panel does not provide the functions for adjusting the position and size of image frame.

Consequently, the preview function of the typical preview method cannot satisfy the user's demands, and the user has to input the film image size before preview process.

### SUMMARY OF THE INVENTION

In view of the above-mentioned problems, an object of the invention is to provide a film images preview method for a film scanner. The film images preview method has an additional image frame positioning function when the film scanner is previewing the film images, so as to automatically or manually adjust the position and size of the image frame.

To achieve the above-mentioned object, the invention provides a film images preview method for a film scanner. The method includes the steps of: scanning film images on the film held at a film holder by a film scanner; recognizing the type of the film holder by receiving information of the film holder outputted from the film scanner; performing an image frame positioning step if the film holder is a 120 type film holder; and displaying a job panel by directly displaying scanned images if the film holder is not a 120 type film holder; and displaying corresponding images according to position and size of image frames adjusted in the frame positioning step if the film holder is a 120 type film holder. In the image frame positioning step, the image sizes of the scanned images are calculated, and the preview method automatically selects frame sizes corresponding to the image sizes to display the corresponding images according to the image sizes.

Therefore, the user does not have to choose the frame size before a preview process, and the invention will automatically select a proper frame size to display the corresponding images.

### BRIEF DESCRIPTION OF THE DRAWINGS

FIG. 1 illustrates a film preview images of a typical preview method, wherein the positions and sizes of the image frames defined on the job panel cannot match with the actually captured images on the film.
FIG. 2 illustrates a flow chart of a film image preview method of the invention for a film scanner.
FIG. 3 illustrates an example of a positioning panel.

### DETAILED DESCRIPTION OF THE INVENTION

The film images preview method of the invention will be described with reference to the accompanying drawings.

When a user will preview the images of the 120 type film by the typical preview method, the user has to first choose a default film image size (frame size). Therefore, the typical preview method can display the corresponding images according to the default film image size. However, when the user chooses an incorrect film image size, the preview function cannot correctly display the image frames with the captured images on the film. To solve this problem, the film images preview method of the invention utilizes an image frame positioning function to automatically display the captured images of the film on the image frames so as to simplify the preview step. That is, the user does not have to input the film image size in advance.

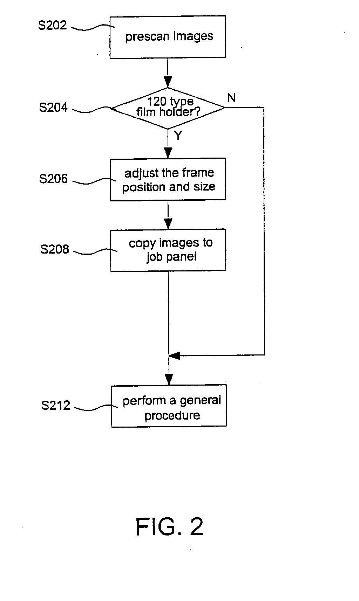

FIG. 2 illustrates a flow chart of a film images preview method of the invention. The steps of the invention will be described in the following with reference to FIG. 2.

Step S202: place a film on a film holder and scan the images on the film with a lower resolution by a film scanner.

Step S204: recognize the type of the film holder. Generally, the film scanner can transfer the type of the film holder to the host. Thus, the host may get the type of the film holder according to the information outputted from the film scanner. When the type of the film holder is a 120 type film holder, the process jumps to step S206, or jump to step S212 otherwise.

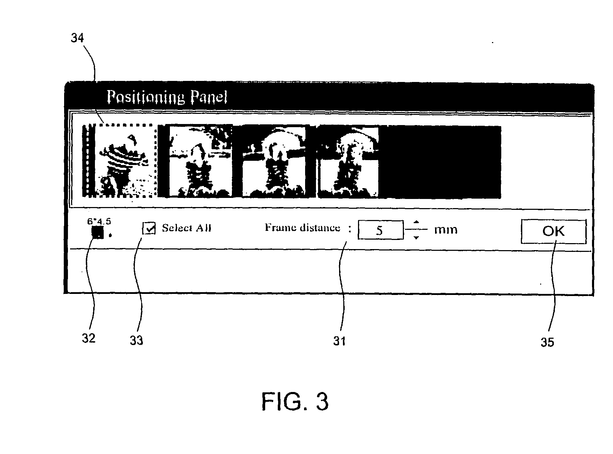

Step S206: display the positioning panel and adjust the position and size of the image frames. For example, a positioning panel is displayed on a monitor, as shown in FIG. 3. Generally, there is an un-exposed gap between adjacent images captured from the film, and the brightness at the un-exposed gap is about 0. Thus, after the host acquires the pre-scanned images from the film scanner, the method searches the un-exposed gaps of the pre-scanned images and calculates the distance between two gaps as a frame distance (width). Thereafter, the images captured from the film are displayed at the image frames according to the frame distance. For example, when the frame distance is 6 cm, the actual image size of the film may be ensured to be 6*6 cm. So, the frame size may be chosen to be a 6*6 cm to display the corresponding images. Meanwhile, the distance of the unexposed gaps on the film may be different, and the gap distance between the image frames may be automatically adjusted according to the distance of the unexposed gaps. After the displayed images in the image frames on positioning panel match with the actual images, the OK button may be clicked to perform a next step.

Step S208: copy the images on the positioning panel to the job panel and display the images on the job panel. After the operation of adjusting the image frames are completed, the system copies each frame images and their corresponding parameters to the job panel, and then the previewed images are displayed on the job panel. The corresponding parameters may include the dimension of the image frame, the start position, and the like.

Step S212: perform a general procedure. For example, the images at some frames are selected and scanned. The general procedure is like the typical preview method, the detail description is omitted.

In addition, the corresponding images are displayed by calculating and automatically selecting a proper size and position for each image frame in step S206. However, the size and position for each image frame also may be adjusted manually. For example, as shown in FIG. 3, the positioning panel has a frame distance input window 31 and a frame size select button 32. Hence, the user may utilize a frame-select-all button 33 to select all the image frames, and then utilize a frame size select button 32 to set the image frame size, or utilize a frame distance input window 31 to adjust the gap between the image frames by, for example, inputting 5 mm. Thereafter, if the gaps of the film images are irregular, a mouse may be utilized to click a movable frame window 34, and to drag the selected movable frame window to adjust the frame position so that the frame position matches with the actual image position.

While certain exemplary embodiments have been described and shown in the accompanying drawings, it is to be understood that such embodiments are merely illustrative of and not restrictive on the broad invention, and that this invention not be limited to the specific construction and arrangement shown and described, since various other modifications may occur to those ordinarily skilled in the art.

## Claims

1. A film images preview method for a film scanner, the method utilizing a film scanner to preview images on a film held at a film holder and to display the previewed images on a job panel, the preview method comprising the steps of:
scanning the images on the film by the film scanner to provide pre-scanned images;
recognizing the type of the film holder by receiving information of the film holder outputted from the film scanner;
performing a frame positioning step if the film holder is a 120 type film holder; and
displaying the job panel, wherein pre-scanned images are directly displayed if the film holder is not the 120 type film holder, and pre-scanned images are displayed with image frames which positions and sizes are adjusted in the frame positioning step if the film holder is a 120 type film holder; wherein
the frame positioning step calculates image sizes of the pre-scanned images, and automatically displays the pre-scanned images with the image frame sizes according to the image sizes.

2. The method according to claim 1, wherein the pre-scanned images are scanned with a lower resolution.

3. The method according to claim 1, wherein the frame positioning step calculates distance between neighboring unexposed gaps from the pre-scanned images as the image sizes, and adjusts the position for each image frame according to the width of each un-exposed gap.

4. A film images preview method, the method utilizing a film scanner to preview images on a film held at a film holder and display the previewed images on a preview window, the method comprising the steps of:
scanning images on the film by the film scanner to provide pre-scanned images;
recognizing the type of the film holder by receiving information of the film holder outputted from the film scanner;
performing a frame positioning step if the film holder is a 120 type film holder or a glass type holder; and
displaying the preview window, wherein pre-scanned images are directly displayed if the film holder is neither the 120 type film holder nor the glass type holder, and pre-scanned images are displayed with image frames which positions and sizes are adjusted in the frame positioning step if the film holder is a 120 type film holder or a glass type holder, wherein
the frame positioning step displays a positioning panel and image frames and provides a position adjusting function so that a user adjusts the position and size for each image frame according to the pre-scanned images in order to match the actual image size and position of the pre-scanned images.

5. The method according to claim 4, wherein the pre-scanned images are scanned with a lower resolution.

6. The method according to claim 4, wherein the frame positioning step includes a frame size input window, a frame size select button, and a frame movable window.
